# EUROPEAN PATENT APPLICATION

(11) **EP 4 644 732 A1**
(43) Date of publication of application: **05.11.2025**
(21) Application number: 23911699.9
(22) Date of filing: 12.12.2023
(51) Int. Cl.: F16J 15/34, F16C 17/04

(54) **SLIDING COMPONENT**

(30) Priority: 28.12.2022 JP 2022211752
(71) Applicant: Eagle Industry Co., Ltd., Minato-ku Tokyo 105-8587 (JP)
(72) Inventor: YAMAGUCHI Gai, Tokyo 105-8587 (JP); UCHIYAMA Ryosuke, Tokyo 105-8587 (JP); TSUKAMOTO Takahiro, Tokyo 105-8587 (JP); NEGISHI Yuta, Tokyo 105-8587 (JP)
(74) Representative: WSL Patentanwälte Partnerschaft mbB
(86) International application number: PCT/JP2023/044480
(87) International publication number: WO 2024/142918

(57) **Abstract**

A sliding component capable of exerting a sufficient foreign matter discharge effect both when the sliding component is rotating at high speed and low speed is provided. At least one sliding surface 11 is provided with a first dynamic pressure generation groove 13 which communicates with a leakage side space and a second dynamic pressure generation groove 14 of which a terminating end position on a sealed fluid side is located on the sealed fluid side in relation to a terminating end position of the first dynamic pressure generation groove on the sealed fluid side, the second dynamic pressure generation groove 14 has an extension portion 14c that protrudes toward the sealed fluid side in relation to the terminating end portion of the first dynamic pressure generation groove 13, and a first dynamic pressure generating region 15 which is constituted by a plurality of minute recesses 16 not communicating with a sealed fluid side space S2 and a leakage side space S1 is formed on the sealed fluid side between the extension portions 14c of the second dynamic pressure generation grooves 14 adjacent to each other in a circumferential direction.

## Description

### {TECHNICAL FIELD}

The present invention relates to a sliding component, for example, a sliding component including a pair of sliding rings that rotate relative to each other and are used for, for example, a shaft sealing device sealing a rotating shaft of a rotating machine in an automotive seal field, a general industrial machinery seal field, or another seal field or a bearing of a machine in an automotive bearing field, a general industrial machinery bearing field, or another bearing field.

### {BACKGROUND ART}

As a shaft sealing device for preventing leakage of a sealed fluid, for example, a mechanical seal is provided with a pair of annular sliding components that rotate relative to each other and have sliding surfaces that slide against each other. In such a mechanical seal, in recent years, there has been a demand for the purpose of environmental measures and the like to reduce the energy lost due to sliding.

For example, a sliding component described in Patent Citation 1 is a mechanical seal in which a sealed liquid exists on the outer diameter side and a gas exists on the inner diameter side, and a sliding surface of one sliding component is provided with a spiral dynamic pressure generation groove communicating with the gas side and having one end closed on the sliding surface. When the sliding components rotate relative to each other, a gas is drawn into the dynamic pressure generation groove, and a dynamic pressure generated at a terminating end of the dynamic pressure generation groove separates the sliding surfaces to form an air film therebetween and achieve low friction.

Further, the dynamic pressure generation groove which generates a dynamic pressure using a gas with such a spiral shape also has a function of discharging foreign matter from the dynamic pressure generation groove to the outside of the sliding surface by the gas sucked from one radial end side during high-speed rotation. Since the plurality of dynamic pressure generation grooves of Patent Citation 1 all have the same radial length, there is a technical problem in that foreign matter accumulates near terminating ends of the dynamic pressure generation grooves and cannot be completely discharged to the outside of the sliding surface.

Therefore, there is known as a sliding component in which some of dynamic pressure generation grooves are formed long in the radial direction to provide a change in radial pressure gradient (for example, see Patent Citation 2). Accordingly, foreign matter is less likely to remain near the terminating ends of the dynamic pressure generation grooves, and the foreign matter discharge effect during high-speed rotation can be improved.

### {CITATION LIST}

### {Patent Literature}

Patent Citation 1: JP S62-31775 A (Page 2, FIG. 2)
Patent Citation 2: WO 2018/139232 A (Page 8, FIG. 3)

### {SUMMARY OF INVENTION}

### {Technical Problem}

However, the dynamic pressure generation groove can achieve a sufficient foreign matter discharge effect by sufficiently increasing the pressure on the terminating end side due to shear with the facing sliding surface during high-speed rotation, but there is a problem in that the pressure on the terminating end side is low during low-speed rotation and a sufficient foreign matter discharge effect is less likely to be exerted.

The present invention has been made in view of such problems and an object thereof is to provide a sliding component capable of exerting a sufficient foreign matter discharge effect both when the sliding component is rotating at high speed and low speed.

### {Solution to Problem}

In order to solve the foregoing problem, a sliding component according to the present invention is a sliding component including a pair of sliding rings having sliding surfaces which rotate relative to each other to partition a sealed fluid side space and a leakage side space, wherein at least one of the sliding surfaces is provided with first dynamic pressure generation grooves each of which communicates with the leakage side space and second dynamic pressure generation grooves each of which has a terminating end position on a sealed fluid side, the terminating end portion being located on the sealed fluid side in relation to a terminating end position of the first dynamic pressure generation groove on the sealed fluid side, wherein each of the second dynamic pressure generation grooves has an extension portion that protrudes toward the sealed fluid side in relation to the terminating end portion of the first dynamic pressure generation groove, and wherein a first dynamic pressure generating region which is constituted by a plurality of minute recesses not communicating with the sealed fluid side space and the leakage side space is formed on the sealed fluid side between the extension portions of the second dynamic pressure generation grooves adjacent to each other in a circumferential direction. According to the aforesaid feature of the present invention, since the minute recess formed between the extension portions of the second dynamic pressure generation grooves adjacent to each other in the circumferential direction generates a dynamic pressure in the first dynamic pressure generating region, it is possible to maintain and supplement the formation of the fluid film from the beginning of low-speed rotation and to improve the foreign matter discharge performance. Further, the leakage side fluid or foreign matter flowing out from the minute recess in the circumferential direction can be collected by the second dynamic pressure generation groove, and the foreign matter can be discharged from the terminating end of the second dynamic pressure generation groove to the sealed fluid side space.

It may be preferable that each of the minute recesses has a circumferential width and a radial width, and narrower one of the circumferential width and the radial width is narrower than circumferential widths of the first dynamic pressure generation groove and the second dynamic pressure generation groove. According to this preferable configuration, since a land is secured on the sealed fluid side in relation to the terminating ends of the first dynamic pressure generation groove and the second dynamic pressure generation groove, it is possible to obtain the dynamic pressure generation effect due to the minute recess during low-speed rotation while preventing the leakage of the sealed fluid.

It may be preferable that a second dynamic pressure generating region which is constituted by a plurality of minute recesses not communicating with the sealed fluid side space and the leakage side space is formed on the sealed fluid side in relation to the terminating end of the second dynamic pressure generation groove. According to this preferable configuration, since a dynamic pressure is generated on the sealed fluid side in relation to the terminating end of the second dynamic pressure generation groove during low-speed rotation, friction during low-speed rotation is reduced and the foreign matter discharge effect is improved.

It may be preferable that the minute recesses constituting the first dynamic pressure generating region formed between the extension portions of the second dynamic pressure generation grooves adjacent to each other in the circumferential direction are equal, in groove pattern, to the minute recesses constituting the second dynamic pressure generating region formed on the sealed fluid side in relation to the terminating end of the second dynamic pressure generation groove. According to this preferable configuration, since the direction of the flow of the fluid guided by the minute recesses becomes constant, the dynamic pressure generation effect is stabilized by suppressing turbulence.

It may be preferable that the second dynamic pressure generating region includes an annular minute recess which is formed on the most sealed fluid side in the second dynamic pressure generating region. According to this preferable configuration, the leakage of the sealed fluid can be prevented.

It may be preferable that the minute recesses constituting the first dynamic pressure generating region formed between the extension portions of the second dynamic pressure generation grooves adjacent to each other in the circumferential direction are formed to lengthen in a relative rotation direction of the sliding surfaces. According to this preferable configuration, since the minute recess does not have the large radial component, there is no adverse effect on the sealing performance in a stop state, and since the minute recess acts as resistance against the fluid flowing out from the first dynamic pressure generation groove toward the sealed fluid side, a dynamic pressure is generated and hence the dynamic pressure generation effect during low-speed rotation can be effectively assisted.

It may be preferable thatAccording to a seventh aspect of the present invention, the minute recesses constituting the first dynamic pressure generating region formed between the extension portions of the second dynamic pressure generation grooves adjacent to each other in the circumferential direction have a circumferential component and a radial component larger than the circumferential component. Instead, it may be preferable that the minute recesses constituting the first dynamic pressure generating region formed between the extension portions of the second dynamic pressure generation grooves adjacent to each other in the circumferential direction are formed so as to lengthen in a radial direction or in an inclination direction which is inclined with respect to the radial direction. According to this preferable configuration, a flow of the radial component is generated in the minute recess, and the foreign matter discharge performance can be further improved.

It may be preferable that the sealed fluid is gas or liquid, or is a mist mixture of liquid and gas.

### {BRIEF DESCRIPTION OF DRAWINGS}

FIG. 1 is a longitudinal cross-sectional view illustrating an example of a mechanical seal as a sliding component according to a first embodiment of the present invention.
FIG. 2 is a view in which a sliding surface of a stationary seal ring in the first embodiment is viewed from the axial direction.
FIG. 3 is an enlarged view in which the sliding surface of the stationary seal ring in the first embodiment is viewed from the axial direction.
FIG. 4 is an explanatory diagram in which the movement of a fluid in first and second dynamic pressure generation grooves and minute recesses during high-speed rotation for the sliding surface of the stationary seal ring in the first embodiment is viewed from the axial direction.
FIG. 5 is an explanatory diagram in which the movement of a fluid in the first and second dynamic pressure generation grooves and minute recesses during low-speed rotation for the sliding surface of the stationary seal ring in the first embodiment is viewed from the axial direction.
FIG. 6 is an enlarged view in which a sliding surface of a stationary seal ring included in a sliding component according to a second embodiment of the present invention is viewed from the axial direction.
FIG. 7 is an enlarged view in which a sliding surface of a stationary seal ring included in a sliding component according to a third embodiment of the present invention is viewed from the axial direction.
FIG. 8 is an enlarged view in which a sliding surface of a stationary seal ring included in a sliding component according to a fourth embodiment of the present invention is viewed from the axial direction.
FIG. 9 is an enlarged view in which a sliding surface of a stationary seal ring included in a sliding component according to a fifth embodiment of the present invention is viewed from the axial direction.
FIG. 10 is an enlarged view in which a sliding surface of a stationary seal ring included in a sliding component according to a sixth embodiment of the present invention is viewed from the axial direction.
FIG. 11 is an enlarged view in which a sliding surface of a stationary seal ring included in a sliding component according to a seventh embodiment of the present invention is viewed from the axial direction.
FIG. 12 is an enlarged view in which a sliding surface of a stationary seal ring included in a sliding component according to an eighth embodiment of the present invention is viewed from the axial direction.
FIG. 13 is a view in which a sliding surface of a stationary seal ring in a modified example of an outside type is viewed from the axial direction.

### {DESCRIPTION OF EMBODIMENTS}

Modes for carrying out a sliding component according to the present invention will be described on the basis of the embodiments.

### {First embodiment}

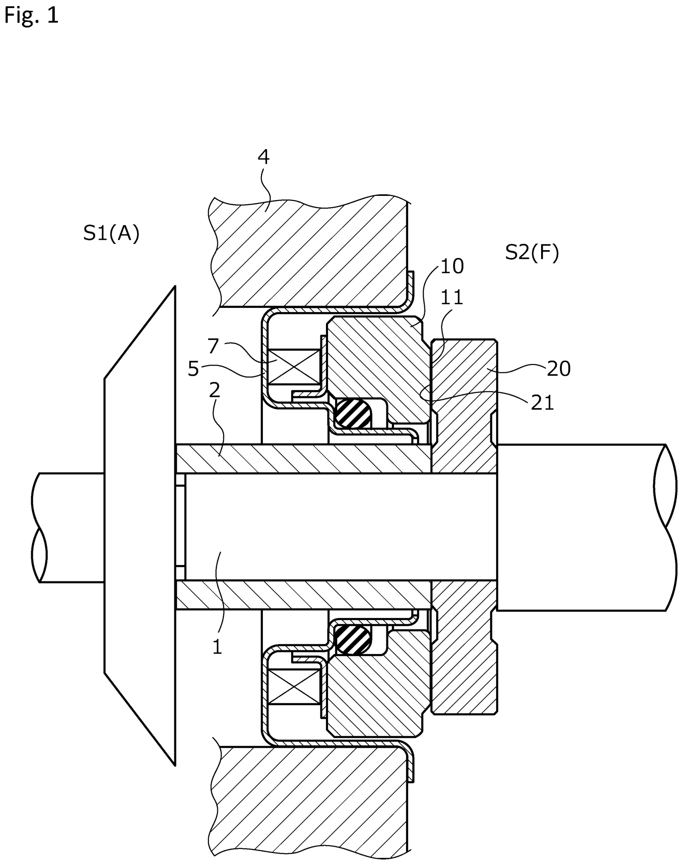

A sliding component according to a first embodiment of the present invention will be described with reference to FIGS. 1 to 5. Furthermore, in this embodiment, an example in which a sliding component is a mechanical seal will be described. Further, the inner space of the mechanical seal is a space S1 in which atmosphere A exists (hereinafter, simply referred to as a "leakage side space"). Further, the outer space of the mechanical seal is a space S2 in which a sealed fluid F exists (hereinafter, simply referred to as a "sealed fluid side space"). Further, the outer diameter side of the sliding component constituting the mechanical seal is referred to as the sealed fluid side (high pressure side), and the inner diameter side thereof is referred to as the leakage side (low pressure side).

The mechanical seal for automobiles illustrated in FIG. 1 is an inside type that seals the sealed fluid F that is leaking from the outer diameter side to the inner diameter side of the sliding surface, and the leakage side space S1 is connected to the atmosphere A. Furthermore, in this embodiment, an example is illustrated in which the sealed fluid F is a high-pressure liquid and the atmosphere A is a gas with a lower pressure than the sealed fluid F. Further, the sealed fluid F is not limited to a liquid, but may be a gas or a mist mixture of liquid and gas. The fluid of the leakage side space S1 is not limited to gas, but may be liquid or a mist mixture of liquid and gas.

The mechanical seal mainly includes a rotating seal ring 20 which is the other annular sliding component and a stationary seal ring 10 which is an annular sliding component. The rotating seal ring 20 is provided on a rotating shaft 1 via a sleeve 2 to be rotatable together with the rotating shaft 1. The stationary seal ring 10 is provided on a seal cover 5 fixed to a housing 4 of an attached device to be non-rotatable and movable in the axial direction. The stationary seal ring 10 is biased in the axial direction by an elastic member 7. Accordingly, a sliding surface 11 of the stationary seal ring 10 and a sliding surface 21 of the rotating seal ring 20 are adapted to slide closely against each other. Furthermore, the sliding surface 21 of the rotating seal ring 20 is flat, and this flat surface does not have any recesses such as grooves.

The stationary seal ring 10 and the rotating seal ring 20 are typically made of SiC (as an example of hard material) or a combination of SiC and carbon (as an example of soft material), but are not limited thereto, and any sliding material can be applied insofar as it is used as a sliding material for a mechanical seal. The SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

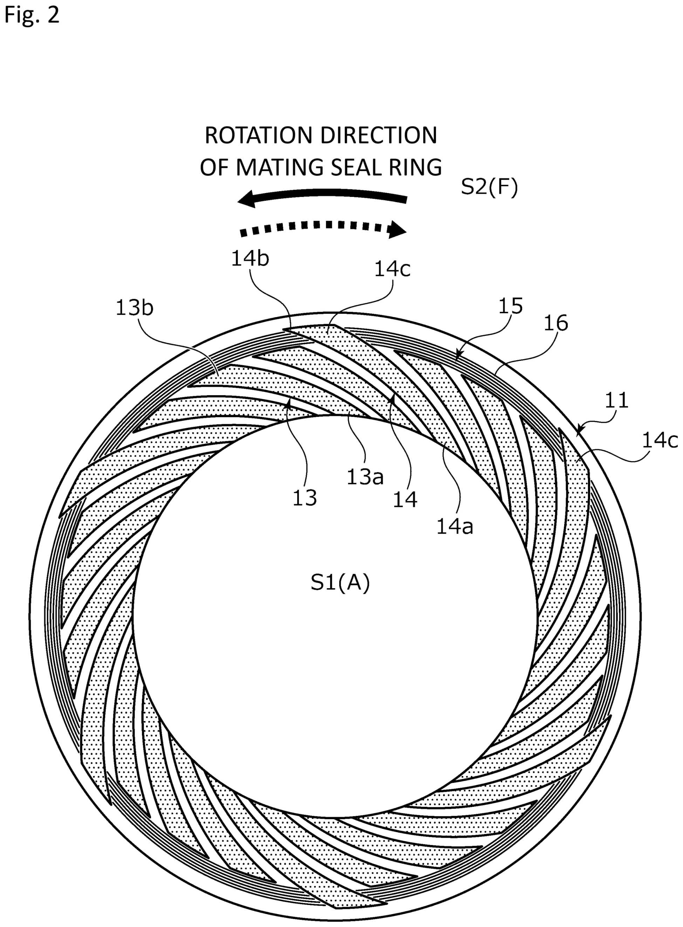

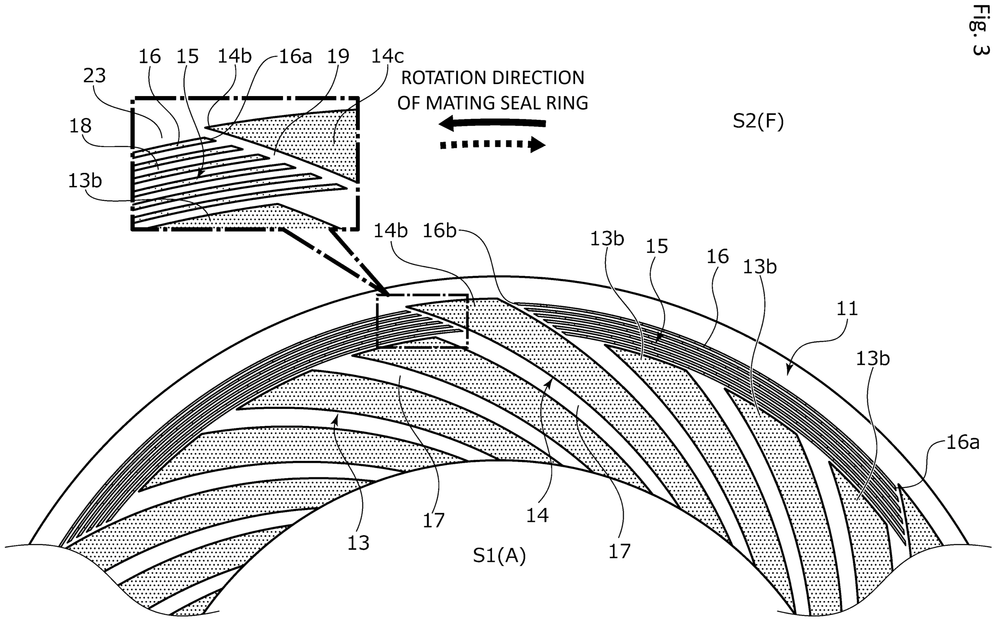

As illustrated in FIGS. 2 and 3, the rotating seal ring 20 which is a mating seal ring slides relative to the stationary seal ring 10 in a counterclockwise direction as indicated by the solid arrow or in a clockwise direction as indicated by the dotted arrow. Hereinafter, a description will be made on the assumption that the rotation direction indicated by the solid arrow is the forward rotation direction and the rotation direction indicated by the dotted arrow is the reverse rotation direction.

A plurality of dynamic pressure generation grooves 13 and 14 of different lengths with terminating ends 13b and 14b at different radial positions are formed on the sliding surface 11 of the stationary seal ring 10. In the first dynamic pressure generation groove 13 having a relatively short radial length, a starting end 13a communicates with the leakage side space S1 and a terminating end 13b does not communicate with the sealed fluid side space S2. In the second dynamic pressure generation groove 14 having a relatively long radial length, a starting end 14a communicates with the leakage side space S1 and a terminating end 14b does not communicate with the sealed fluid side space S2.

The second dynamic pressure generation grooves 14 are arranged at equal intervals in the circumferential direction of the sliding surface 11. The first dynamic pressure generation grooves 13 are arranged in a plurality of positions at equal intervals in the circumferential direction between the adjacent second dynamic pressure generation grooves 14. In this embodiment, six second dynamic pressure generation grooves 14 are arranged in the circumferential direction of the sliding surface 11. Three first dynamic pressure generation grooves 13 are arranged between each pair of second dynamic pressure generation grooves 14.

Adjacent first dynamic pressure generation grooves 13 are separated from each other at equal distances in the circumferential direction. Further, the distance between the first dynamic pressure generation groove 13 and the adjacent second dynamic pressure generation groove 14 is the same as the distance between the first dynamic pressure generation grooves 13. In other words, the adjacent first dynamic pressure generation grooves 13 and second dynamic pressure generation grooves 14 are all equally separated in the circumferential direction. Furthermore, the present invention is not limited thereto, and the adjacent first dynamic pressure generation groove 13 and second dynamic pressure generation groove 14 may be separated by a distance different from the circumferential distance between the first dynamic pressure generation grooves 13.

The starting end 13a of the first dynamic pressure generation groove 13 communicates with the leakage side space S1. The first dynamic pressure generation groove 13 is a spiral groove that extends in an arc shape inclined from the starting end 13a toward the outer diameter side in the forward rotation direction of the rotating seal ring 20 (the forward rotation direction of relative rotation), and generates a dynamic pressure at the terminating end 13b when the rotating seal ring 20 rotates forward. Similarly, the starting end 14a of the second dynamic pressure generation groove 14 communicates with the leakage side space S1. The second dynamic pressure generation groove 14 is a spiral groove that extends in an arc shape with the same curvature radius as the first dynamic pressure generation groove 13 from the starting end 14a toward the outer diameter side, and generates a dynamic pressure at the terminating end 14b when the rotating seal ring 20 rotates forward. Furthermore, the first and second dynamic pressure generation grooves 13 and 14 are not limited to extending in an arc shape inclined in the forward rotation direction of the rotating seal ring 20, but may, for example, extend in a straight line inclined in the forward rotation direction of the rotating seal ring 20 (the forward rotation direction of relative rotation).

The terminating end 13b of the first dynamic pressure generation groove 13 is located on the leakage side in relation to the terminating end 14b of the second dynamic pressure generation groove 14. In other words, the second dynamic pressure generation groove 14 is formed to have an extension portion 14c that extends further toward the sealed fluid side in the radial direction than the first dynamic pressure generation groove 13.

Further, a plurality of arc grooves 16 which are minute recesses are formed on the sealed fluid side in relation to the terminating end 13b of the first dynamic pressure generation groove 13 to be located between the terminating ends 14b of the second dynamic pressure generation grooves 14 adjacent to each other in the circumferential direction, that is, between the extension portions 14c. A region in which these arc grooves 16 are formed is referred to as a first dynamic pressure generating region 15. Specifically, in this embodiment, the first dynamic pressure generating region 15 is constituted by a plurality of arc grooves 16 formed in parallel to each other at predetermined intervals in the radial direction of the sliding surface 11.

As illustrated in FIG. 3, the arc groove 16 does not communicate with the leakage side space S1 and the sealed fluid side space S2 and also does not communicate with the first and second dynamic pressure generation grooves 13 and 14. The arc groove 16 has an arc shape that follows the relative rotation direction with the sliding surface 21 of the facing rotating seal ring 20. Both ends 16a and 16b of the arc groove 16 in the extension direction are arranged near the terminating ends 14b of the second dynamic pressure generation grooves 14 adjacent to each other. From the viewpoints of preventing leakage and discharging foreign matter, it is preferable that the separation distance between both ends 16a and 16b and the second dynamic pressure generation groove 14 be shorter than the separation distance between the first dynamic pressure generation groove 13 and the adjacent second dynamic pressure generation groove 14.

The most leakage side arc groove 16 that constitutes the dynamic pressure generating region 15 is adjacent to the terminating end 13b of the first dynamic pressure generation groove 13. The most sealed fluid side arc groove 16 is disposed at a position not extending toward the sealed fluid side in relation to the terminating end 14b of the second dynamic pressure generation groove 14.

Further, the arc grooves 16 are formed to have a depth equal to or smaller than the first and second dynamic pressure generation grooves 13 and 14. Further, each of the arc grooves 16 is formed so that the narrower radial width of the circumferential width and the radial width is narrower than the narrower circumferential width of the first and second dynamic pressure generation grooves 13 and 14. Regarding the volume as well, each of the arc grooves 16 is smaller than the first and second dynamic pressure generation grooves 13 and 14. Preferably, the depth is half or less, the width is one-fifth or less, and the volume is one-tenth or less.

Further, the sliding surface 11 has lands 17, 18, 19, and 23 which are flat and on the same plane. The land 17 is a portion between the first and second dynamic pressure generation grooves 13 and 14 in the circumferential direction. The land 18 is a portion between the arc grooves 16 in the radial direction. The land 19 is a portion between the terminating end 14b of the second dynamic pressure generation groove 14 and both ends 16a and 16b of the arc groove 16. The land 23 is a portion on the sealed fluid side in relation to the arc groove 16.

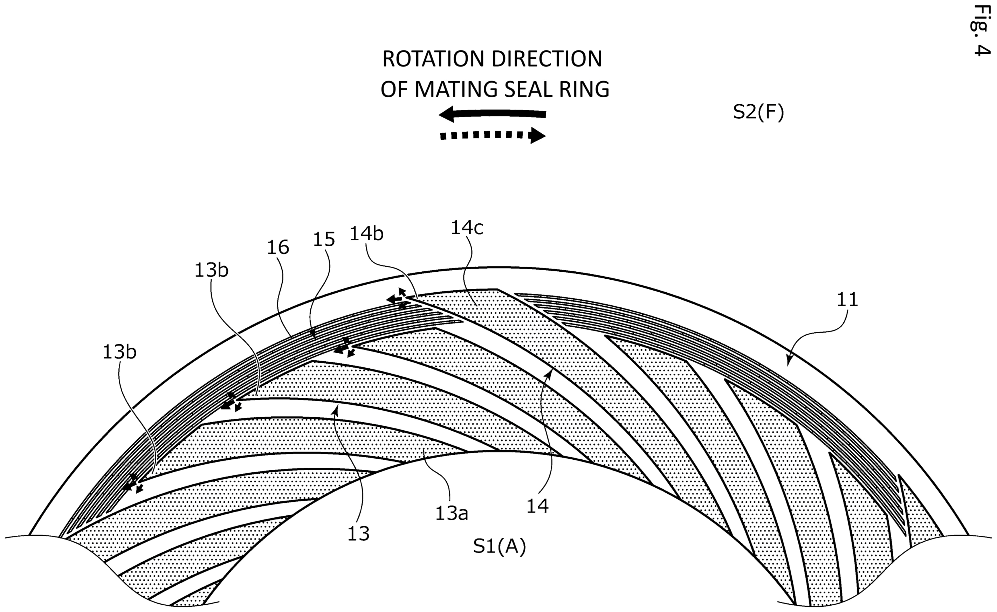

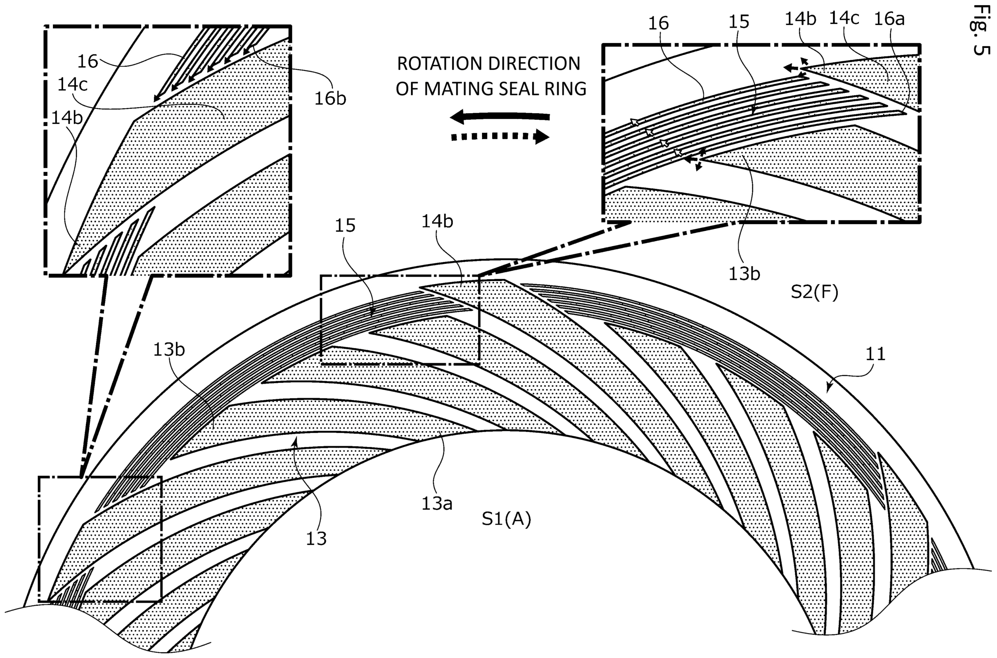

Next, the operation of the stationary seal ring 10 and the rotating seal ring 20 during relative rotation will be described with reference to FIGS. 4 and 5. Furthermore, in this embodiment, the operation of the rotating seal ring 20 in a stop state, a low-speed rotation state, and a high-speed rotation state will be described in order.

First, in the stop state in which the rotating seal ring 20 does not rotate, the gas of the leakage side space S1 flows from the starting end 13a into the first dynamic pressure generation groove 13. Further, similarly, the gas of the leakage side space S1 flows from the starting end 14a into the second dynamic pressure generation groove 14. The stationary seal ring 10 is biased toward the rotating seal ring 20 by the elastic member 7. The sliding surfaces 11 and 21 are in contact with each other. The land 23 which is secured in an annular shape on the sealed fluid side of the arc groove 16 prevents the sealed fluid F of the sealed fluid side space S2 from leaking into the leakage side space S1. Further, since the arc groove 16 does not have a large radial component, the plurality of arc grooves 16 formed in a line in the radial direction can function as a labyrinth seal and improve the sealing performance in the stop state.

Next, a high-speed rotation in which the rotating seal ring 20 rotates at high speed in the forward direction relative to the stationary seal ring 10, such as in a steady operation state, will be described. As illustrated in FIG. 4, in the high-speed rotation state, the gas in the first dynamic pressure generation groove 13 is moved in the rotation direction of the rotating seal ring 20 due to shear with the sliding surface 21 to move toward the terminating end 13b. Further, similarly, the gas in the second dynamic pressure generation groove 14 is moved in the rotation direction of the rotating seal ring 20 due to shear with the sliding surface 21 to move toward the terminating end 14b.

Accordingly, a dynamic pressure is generated at the terminating end 13b of the first dynamic pressure generation groove 13 and its vicinity and the terminating end 14b of the second dynamic pressure generation groove 14 and its vicinity. This dynamic pressure separates the sliding surfaces 11 and 21, and a fluid film is formed between the sliding surfaces 11 and 21 by the gas, which is the fluid on the leakage side, thereby achieving the effect of reducing friction. Furthermore, since a dynamic pressure is generated at the terminating end 13b and the terminating end 14b and a negative pressure is generated proportionally at the starting end 13a and the starting end 14a, a gas is sucked from the starting end 13a and the starting end 14a into the first dynamic pressure generation groove 13 and the second dynamic pressure generation groove 14.

Further, the foreign matter and the sealed fluid F between the sliding surfaces 11 and 21 can be effectively discharged to the outside of the gap between the sliding surfaces 11 and 21 by the dynamic pressure generated at the terminating end 13b of the first dynamic pressure generation groove 13 and its vicinity and the terminating end 14b of the second dynamic pressure generation groove 14 and its vicinity.

Specifically, a dynamic pressure is generated at the terminating ends 13b of the first dynamic pressure generation grooves 13 which are arranged in larger numbers than the second dynamic pressure generation grooves 14. In addition, a dynamic pressure is generated at the terminating end 14b of the second dynamic pressure generation groove 14 which extends to the sealed fluid side in relation to the first dynamic pressure generation groove 13. Due to these dynamic pressures, a change in radial pressure gradient occurs. Particularly, since the terminating end 14b of the second dynamic pressure generation groove 14 is located in the vicinity of the sealed fluid side, the foreign matter and the sealed fluid F can be effectively and easily discharged to the outside of the gap between the sliding surfaces 11 and 21, that is, into the sealed fluid side space S2.

Furthermore, in the high-speed rotation state, the dynamic pressure generation effect due to the first and second dynamic pressure generation grooves 13 and 14 is dominant, and the dynamic pressure generation effect due to the arc groove 16 which is the minute recess almost does not exist.

Furthermore, since the second dynamic pressure generation grooves 14 are arranged in small numbers than the first dynamic pressure generation grooves 13, the lands on the sealed fluid side in relation to the terminating ends 13b and 14b of the first and second dynamic pressure generation grooves 13 and 14 are sufficiently secured, and the effect of preventing the leakage of the sealed fluid F can be maintained.

Next, the low-speed rotation state immediately after the rotating seal ring 20 starts to rotate relative to the stationary seal ring 10 in the forward rotation direction will be described. As illustrated in FIG. 5, even in the low-speed rotation state, the gas in the first dynamic pressure generation groove 13 and the second dynamic pressure generation groove 14 is moved in the rotation direction of the rotating seal ring 20 due to shear with the sliding surface 21. The gas in the first dynamic pressure generation groove 13 and the second dynamic pressure generation groove 14 moves toward the terminating end 13b or the terminating end 14b. Accordingly, the pressure is increased at each of the terminating end 13b and the terminating end 14b, and a dynamic pressure is generated at the terminating end 13b, the terminating end 14b, and its vicinity. On the other hand, the dynamic pressure effect during low-speed rotation state is lower than that in the high-speed rotation state.

Similarly, since the gas in the arc groove 16 is moved in the rotation direction of the rotating seal ring 20 due to shear with the sliding surface 21, the gas moves toward the terminating end 16b. Accordingly, the pressure is increased at the terminating end 16b, and a dynamic pressure is generated at the terminating end 16b and its vicinity. Since the arc groove 16 is formed to have a smaller volume than the first and second dynamic pressure generation grooves 13 and 14, a dynamic pressure can be generated at the terminating end 16b of the arc groove 16 and its vicinity even when the rotating seal ring 20 is in the low-speed rotation state. In other words, the arc groove 16 can generate a dynamic pressure in a supplementary manner to the first dynamic pressure generation groove 13 and the second dynamic pressure generation groove 14.

The dynamic pressure generating region 15 which is constituted by the plurality of arc grooves 16 is located on the sealed fluid side in relation to the terminating end 13b of the first dynamic pressure generation groove 13 and in the vicinity of the terminating end 14b of the second dynamic pressure generation groove 14. For this reason, the dynamic pressure generated on the sealed fluid side between the sliding surfaces 11 and 21 separates the sliding surfaces 11 and 21 from each other, and the foreign matter can be effectively and easily discharged to the outside of the gap between the sliding surfaces 11 and 21, that is, into the sealed fluid side space S2. In this way, since the foreign matter that causes resistance to rotation can be quickly discharged at an early stage before the rotation speed reaches high speed, the sliding surfaces 11 and 21 can rotate satisfactorily relative to each other.

The second dynamic pressure generation groove 14 extends radially longer than the first dynamic pressure generation groove 13. For this reason, particularly in the low-speed rotation state, the pressure at the terminating end 14b and its vicinity is lower than that of the first dynamic pressure generation groove 13, that is, the dynamic pressure generation effect tends to be insufficient. The arc groove 16 is located on the sealed fluid side in relation to the terminating end 13b of the first dynamic pressure generation groove 13 and generates a dynamic pressure at that position. That is, a dynamic pressure is generated at the terminating end 16b of the arc groove 16 in addition to the dynamic pressure generated at the terminating end 13b of the first dynamic pressure generation groove 13, and a high foreign matter discharge effect can be achieved. In other words, the arc groove 16 can supplement the dynamic pressure generation effect and the foreign matter discharge effect during low-speed rotation state.

Further, the dynamic pressure generated at the terminating end 16b of the arc groove 16 can assist the formation of the fluid film in the low-speed rotation state. Accordingly, since it is possible to maintain and supplement the formation of the fluid film from the beginning of low-speed rotation, wear between the sliding surfaces 11 and 21 can be suppressed.

Further, the first dynamic pressure generating region 15 is formed between the terminating ends 14b of the adjacent second dynamic pressure generation grooves 14. For this reason, the leakage side fluid or foreign matter flowing out from the terminating end 16b of the arc groove 16 and its vicinity in the circumferential direction can be collected by the second dynamic pressure generation groove 14, and can be discharged from the terminating end 14b of the second dynamic pressure generation groove 14 to the sealed fluid side space S2.

Further, since the arc groove 16 is formed along the rotation direction of the facing sliding surface 21 and has no large radial component, it is possible to improve the sealing performance in the stop state. Further, as illustrated in FIG. 5, the arc groove 16 acts as resistance against the fluid flowing out from the first dynamic pressure generation groove 13 toward the sealed fluid side. Accordingly, a dynamic pressure is generated as indicated by the white arrow, and the dynamic pressure generation effect during low-speed rotation can be effectively assisted. Specifically, a part of the fluid flowing out from the first dynamic pressure generation groove 13 flows from the side of the arc groove 16 to generate a dynamic pressure from the terminating end 16b of the arc groove 16. In addition, the radial flow of the fluid flowing out from the first dynamic pressure generation groove 13 can generate a dynamic pressure between the sliding surfaces 11 and 21 from the side of the arc groove 16 on the sealed fluid side.

### {Second embodiment}

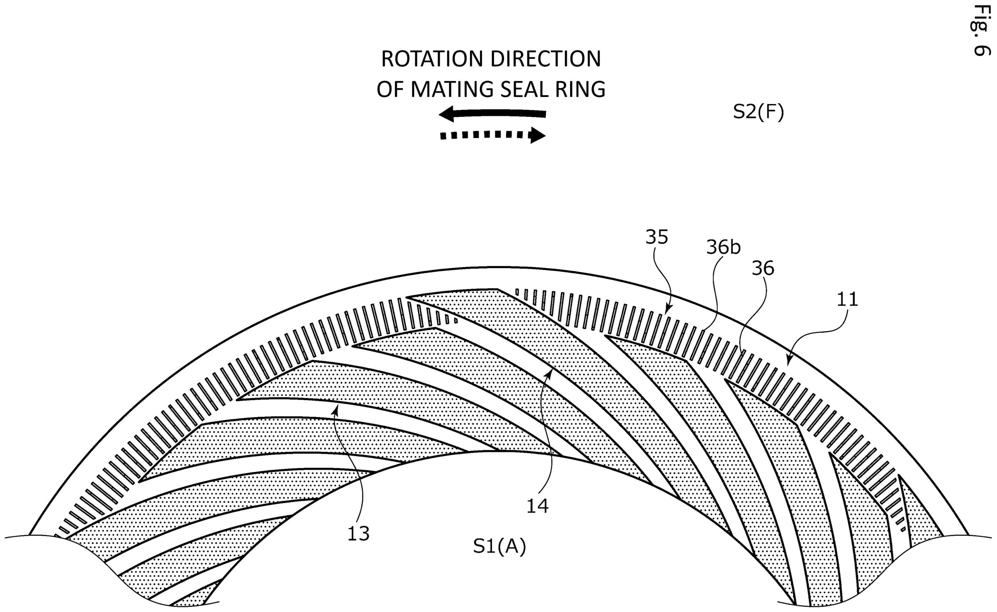

Next, a sliding component according to a second embodiment of the present invention will be described with reference to FIG. 6. Furthermore, the description of the configurations which are the same as and overlap with those of the first embodiment will be omitted.

A first dynamic pressure generating region 35 of this embodiment is constituted by a plurality of radial grooves 36 which are minute recesses extending in the radial direction on the sliding surface 11. The radial grooves 36 generate a dynamic pressure at the terminating end 36b when the rotating seal ring 20 rotates forward. The radial grooves 36 generate a flow of a radial component, which can further improve the foreign matter discharge performance. Further, since the radial grooves 36 are substantially orthogonal to the relative rotation direction, a dynamic pressure is easily generated during extremely slow relative rotation.

### {Third embodiment}

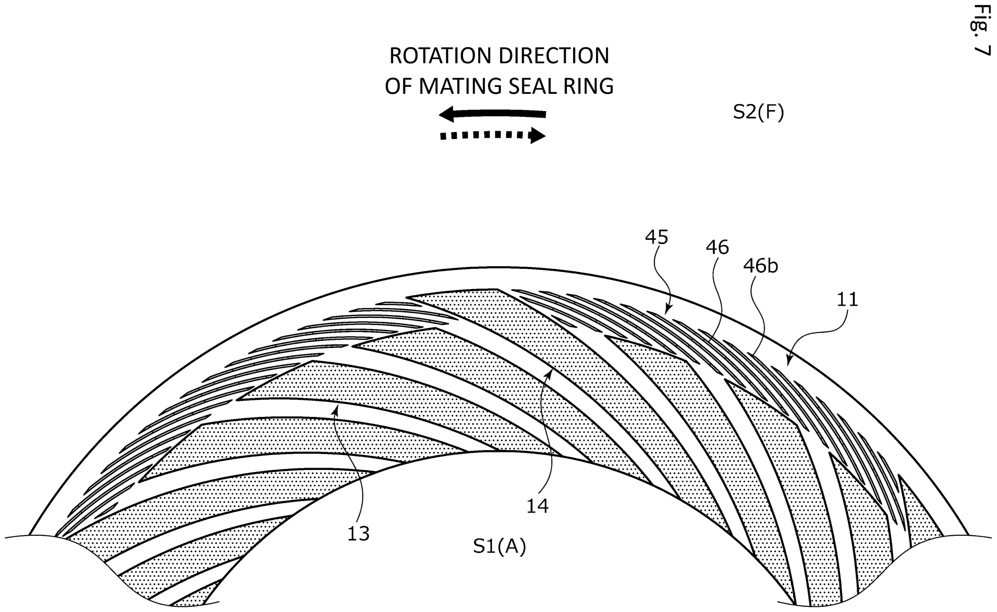

Next, a sliding component according to a third embodiment of the present invention will be described with reference to FIG. 7. Furthermore, the description of the configurations which are the same as and overlap with those of the first embodiment will be omitted.

A first dynamic pressure generating region 45 of this embodiment is constituted by a plurality of spiral grooves 46 which are minute recesses extending in an arc shape inclined in the forward rotation direction of the rotating seal ring 20 in the sliding surface 11. The spiral groove 46 generates a dynamic pressure at a terminating end 46b when the rotating seal ring 20 rotates forward. In the spiral groove 46, a flow of a radial component and a flow of a circumferential component are generated, and the foreign matter discharge performance can be further improved. Further, since the spiral groove 46 extends to intersect with the relative rotation direction, a relative high dynamic pressure is easily generated during extremely slow relative rotation.

### {Fourth embodiment}

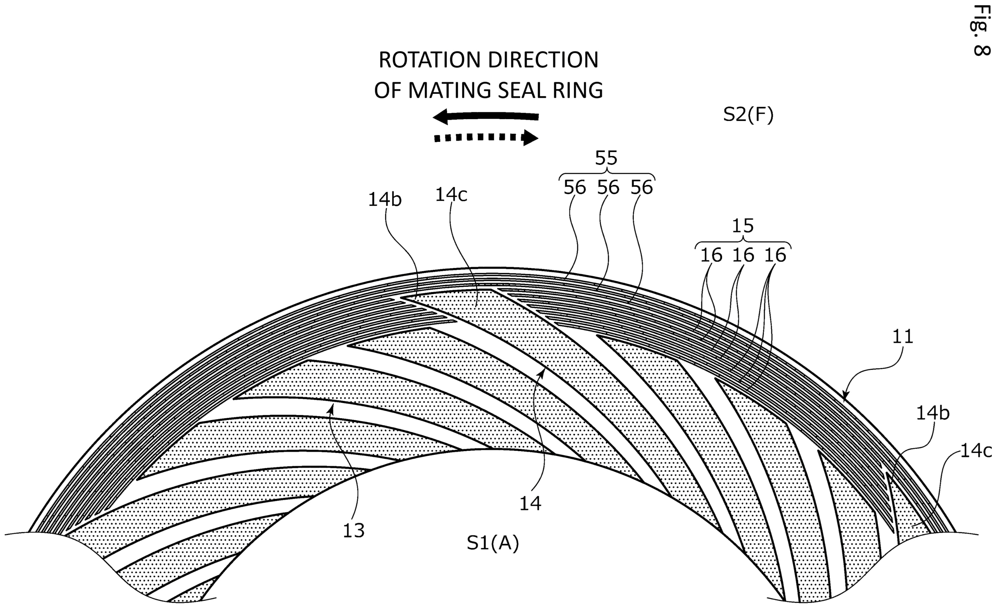

Next, a sliding component according to a fourth embodiment of the present invention will be described with reference to FIG. 8. Furthermore, the description of the configurations which are the same as and overlap with those of the first embodiment will be omitted.

As illustrated in FIG. 8, the sliding surface 11 is further provided with a second dynamic pressure generating region 55 in addition to the first dynamic pressure generating region 15. The second dynamic pressure generating region 55 is constituted by a plurality of annular grooves 56 which are minute recesses arranged on the sealed fluid side in relation to the terminating end 14b of the second dynamic pressure generation groove 14. Further, the annular groove 56 generates a dynamic pressure when the fluid therein is subjected to a shear force during relative rotation and when the fluid moving toward the outer diameter side crosses the annular groove. Since the dynamic pressure generation effect due to the second dynamic pressure generating region 55 is added, the interface between the leakage side fluid and the sealed fluid F is pushed out toward the sealed fluid side beyond the terminating end 14b of the second dynamic pressure generation groove 14 in the low-speed rotation state. Accordingly, the foreign matter discharge effect can be improved and the leakage of the sealed fluid can be suppressed.

In addition, the arc grooves 16 constituting the first dynamic pressure generating region 15 and the annular grooves 56 constituting the second dynamic pressure generating region 55 are concentric and have the same shape. Accordingly, since the direction of the flow of the gas guided by the arc grooves 16 and the annular grooves 56 becomes constant, the dynamic pressure generation effect is stabilized by suppressing turbulence. Further, since the annular groove 56 is disposed on the sealed fluid side in relation to the terminating end 14b of the second dynamic pressure generation groove 14, the sealing performance in the stop state is improved.

### {Fifth embodiment}

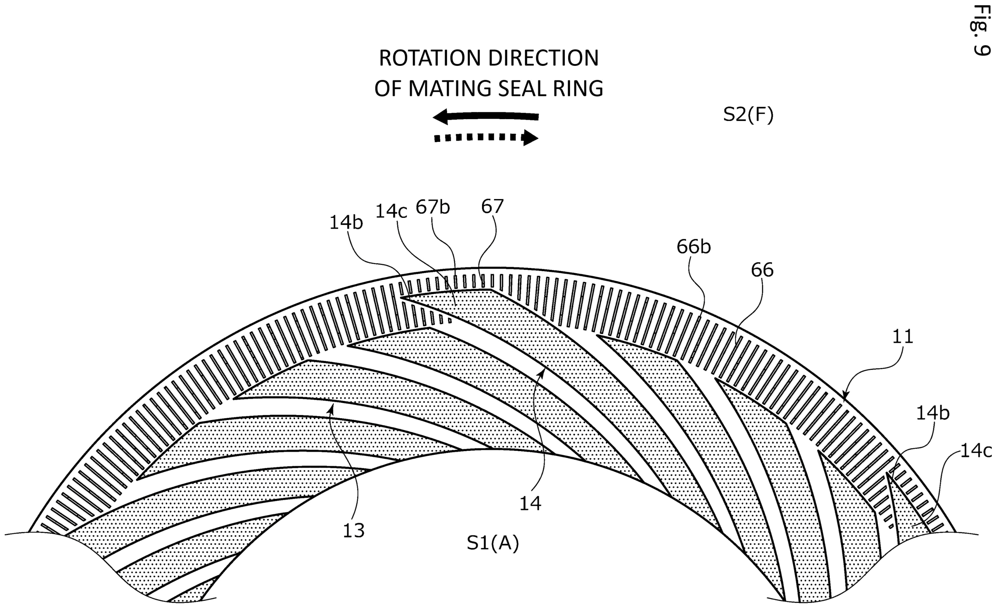

Next, a sliding component according to a fifth embodiment of the present invention will be described with reference to FIG. 9. Furthermore, the description of the configurations which are the same as and overlap with those of the first embodiment will be omitted.

As illustrated in FIG. 9, a plurality of radial grooves 66 and 67 are arranged on the sliding surface 11 at predetermined intervals in the circumferential direction. The radial grooves 66 are arranged between the extension portions 14c of the adjacent second dynamic pressure generation grooves 14. The radial groove 66 extends to the sealed fluid side in relation to the terminating end 14b of the second dynamic pressure generation groove 14. The radial grooves 66 constitute a part of the first dynamic pressure generating region between the extension portions 14c of the adjacent second dynamic pressure generation grooves 14 and the second dynamic pressure generating region on the sealed fluid side in relation to the gap between the terminating ends 14b of the adjacent second dynamic pressure generation grooves 14. In other words, in the radial groove 66, the radial groove between the extension portions 14c of the adjacent second dynamic pressure generation grooves 14 and the radial groove on the sealed fluid side in relation to the gap between the terminating ends 14b of the adjacent second dynamic pressure generation grooves 14 communicate with each other in the same shape.

The radial groove 67 is a minute recess disposed on the sealed fluid side in relation to the terminating end 14b of the second dynamic pressure generation groove 14. A dynamic pressure is generated at a terminating end 66b of the radial groove 66 and a terminating end 67b of the radial groove 67 located on the sealed fluid side to overlap with each other in the extension direction of the terminating end 14b of the second dynamic pressure generation groove 14. Due to these dynamic pressures, the interface between the leakage side fluid and the sealed fluid F is effectively pushed toward the sealed fluid side in relation to the terminating end 14b of the second dynamic pressure generation groove 14 in the low-speed rotation state. Accordingly, the foreign matter discharge effect can be improved and the leakage of the sealed fluid can be suppressed.

### {Sixth embodiment}

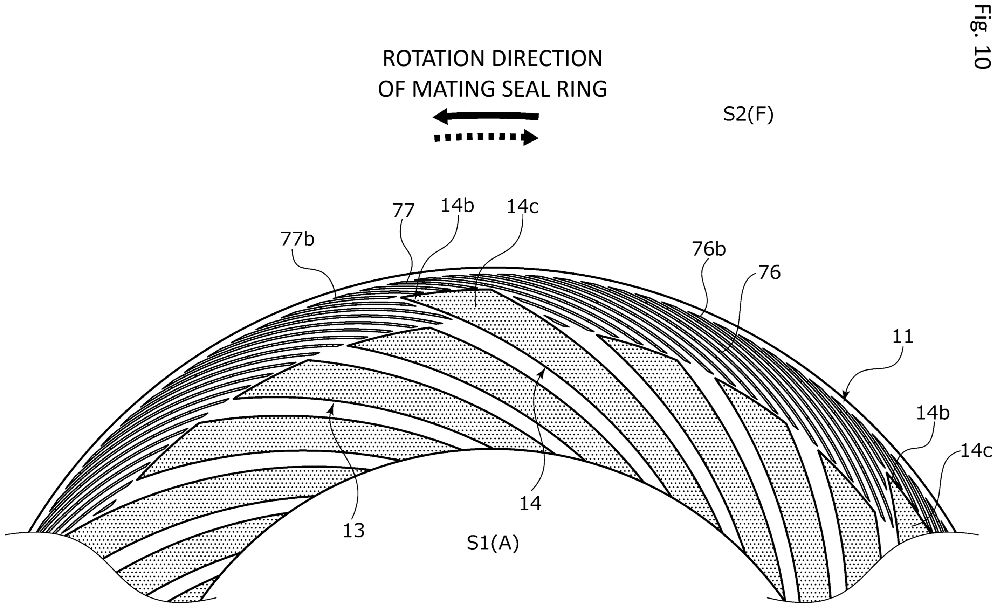

Next, a sliding component according to a sixth embodiment of the present invention will be described with reference to FIG. 10. Furthermore, the description of the configurations which are the same as and overlap with those of the first embodiment will be omitted.

As illustrated in FIG. 10, a plurality of spiral grooves 76 and 77 are arranged on the sliding surface 11 at predetermined intervals in the circumferential direction. The spiral groove 76 is disposed between the extension portions 14c of the adjacent second dynamic pressure generation grooves 14. The spiral groove 76 extends to the sealed fluid side in relation to the terminating end 14b of the second dynamic pressure generation groove 14. The spiral groove 76 constitutes a part of the first dynamic pressure generating region between the extension portions 14c of the adjacent second dynamic pressure generation grooves 14 and the second dynamic pressure generating region on the sealed fluid side in relation to the gap between the terminating ends 14b of the adjacent second dynamic pressure generation grooves 14. In other words, in the spiral groove 76, the spiral groove between the extension portions 14c of the terminating ends 14b of the adjacent second dynamic pressure generation grooves 14 and the spiral groove on the sealed fluid side in relation to the gap between the terminating ends 14b of the adjacent second dynamic pressure generation grooves 14 communicate with each other in the same shape.

The spiral groove 77 is a minute recess disposed on the sealed fluid side in relation to the terminating end 14b of the second dynamic pressure generation groove 14. A dynamic pressure is generated at a terminating end 76b of the spiral groove 76 and a terminating end 77b of the spiral groove 77 located on the sealed fluid side to overlap with each other in the extension direction of the terminating end 14b of the second dynamic pressure generation groove 14. Due to these dynamic pressures, the interface between the leakage side fluid and the sealed fluid is effectively pushed toward the sealed fluid side in relation to the terminating end 14b of the second dynamic pressure generation groove 14 in the low-speed rotation state. Accordingly, the foreign matter discharge effect can be improved and the leakage of the sealed fluid F can be suppressed.

### {Seventh embodiment}

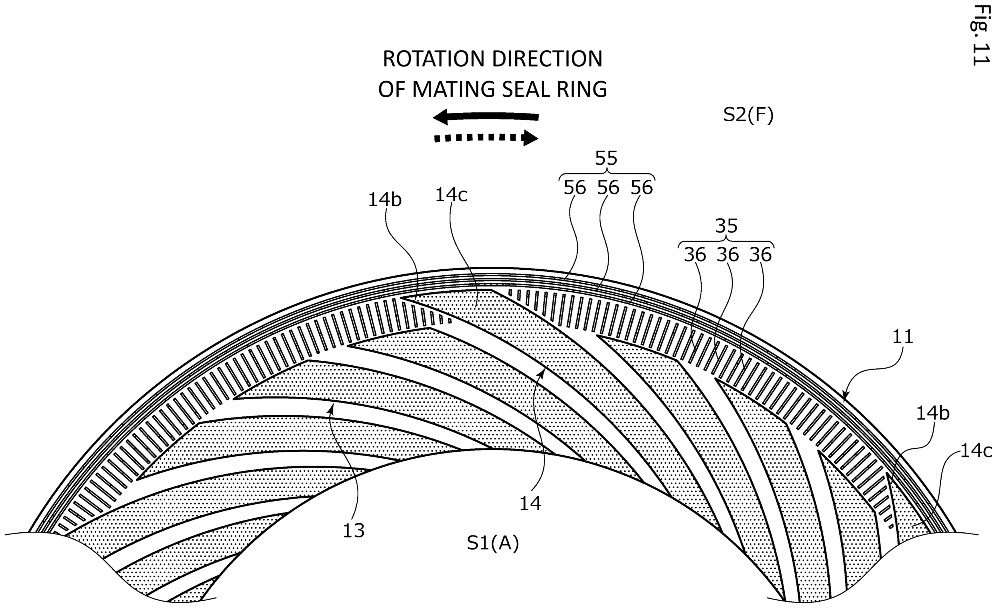

Next, a sliding component according to a seventh embodiment of the present invention will be described with reference to FIG. 11. Furthermore, the description of the configurations which are the same as and overlap with those of the first embodiment will be omitted.

As illustrated in FIG. 11, the sliding surface 11 is further provided with the second dynamic pressure generating region 55 in addition to the first dynamic pressure generating region 35. The first dynamic pressure generating region 35 is constituted by the plurality of radial grooves 36 formed between the extension portions 14c of the second dynamic pressure generation grooves 14. The second dynamic pressure generating region 55 is constituted by the annular grooves 56 which are the plurality of minute recesses arranged on the sealed fluid side in relation to the terminating end 14b of the second dynamic pressure generation groove 14. Accordingly, since the dynamic pressure generation effect due to the second dynamic pressure generating region 55 is added to the dynamic pressure generation effect due to the first dynamic pressure generating region 35, the foreign matter discharge performance can be further improved. Further, the annular groove 56 improves the sealing performance in the stop state.

### {Eighth embodiment}

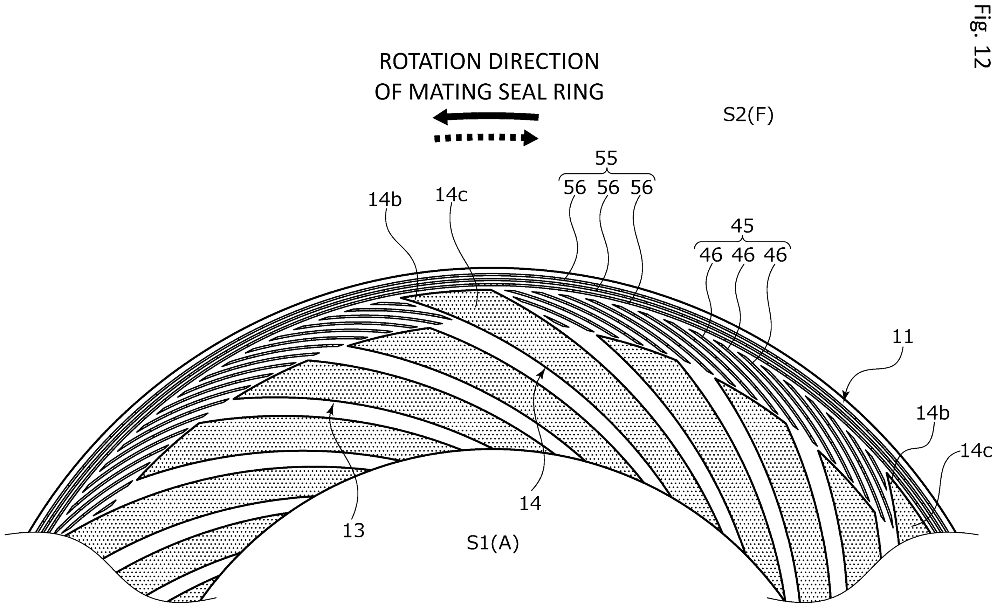

Next, a sliding component according to an eighth embodiment of the present invention will be described with reference to FIG. 12. Furthermore, the description of the configurations which are the same as and overlap with those of the first embodiment will be omitted.

As illustrated in FIG. 12, the sliding surface 11 is further provided with the second dynamic pressure generating region 55 in addition to the first dynamic pressure generating region 45. The first dynamic pressure generating region 45 is constituted by the plurality of spiral grooves 46 formed between the extension portions 14c of the second dynamic pressure generation grooves 14. The second dynamic pressure generating region 55 is constituted by the plurality of annular grooves 56 arranged on the sealed fluid side in relation to the terminating end 14b of the second dynamic pressure generation groove 14. Accordingly, since the dynamic pressure generation effect due to the second dynamic pressure generating region 55 is added to the dynamic pressure generation effect due to the first dynamic pressure generating region 45, the foreign matter discharge performance can be further improved. Further, the annular groove 56 improves the sealing performance in the stop state.

Although the embodiments of the present invention have been described above with reference to the drawings, the specific configuration is not limited to these embodiments, and the present invention also includes modifications and additions that do not deviate from the scope of the present invention.

For example, in the first to eighth embodiments, although the mechanical seal for automobiles has been described as an example of the sliding component, other mechanical seals for general industrial machines and the like may also be used. Further, the present invention is not limited to the mechanical seal, and may be applied to sliding components other than mechanical seals, such as sliding bearings.

Further, in the first to eighth embodiments, although an example has been described in which the first and second dynamic pressure generation grooves and the minute recesses are provided in the stationary seal ring, the first and second dynamic pressure generation grooves and the minute recesses may be provided in the rotating seal ring or the minute recesses may be provided on both surfaces of the stationary seal ring and the rotating seal ring.

Further, in the first to eighth embodiments, although it has been described that the sealed fluid side is the high pressure side and the leakage side is the low pressure side, the sealed fluid side may be the low pressure side and the leakage side may be the high pressure side, and the sealed fluid side and the leakage side may have substantially the same pressure.

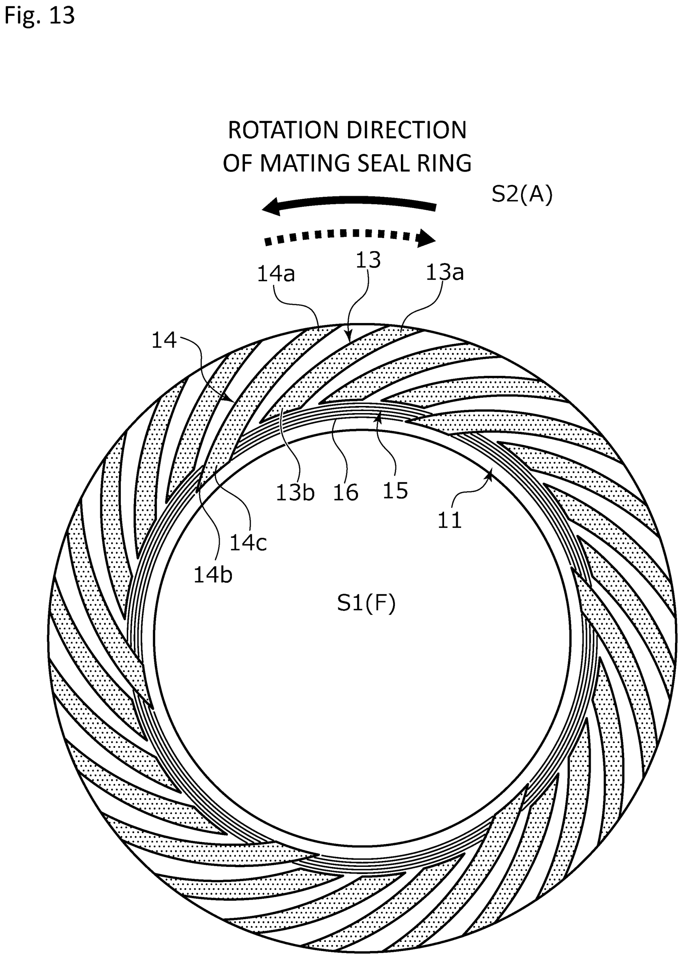

Further, the mechanical seal having the sliding components of the first to eighth embodiments has been described as an inside type, but may be applied to an outside type that seals the fluid leaking from the inner diameter side toward the outer diameter side of the sliding surface. For example, a modified example of the first embodiment which is an outside type is illustrated in FIG. 13.

Further, in the first to eighth embodiments, although it has been described that the first and second dynamic pressure generation grooves 13 and 14 communicate with the leakage space, the present invention is not limited thereto, and they may not communicate with each other if a dynamic pressure can be generated.

Further, in the first to eighth embodiments, although it has been described that the plurality of second dynamic pressure generation grooves 14 are provided in the circumferential direction, at least one of them may be provided.

Further, in the first to eighth embodiments, although it has been described that each of the minute recesses has a groove shape, the present invention is not limited to the groove shape, but for example, a dimple or the like may be used. Furthermore, in the case of the dimple, a part of the dimple may be open in a crescent shape at the edge of the sealed fluid side.

Further, the minute recesses constituting the first and second dynamic pressure generating regions refer to recesses having a depth of half or less, a width of one-fifth or less, and a volume of one-tenth or less with respect to the first and second dynamic pressure generation grooves 13 and 14, and the shape is not limited within these ranges.

In the fifth and sixth embodiments, although the minute recesses constituting the first dynamic pressure generating region formed between the terminating ends 14b of the second dynamic pressure generation grooves 14 extend to the sealed fluid side in relation to the terminating ends 14b of the second dynamic pressure generation grooves 14 to constitute the second dynamic pressure generating region, the present invention is not limited thereto, and the minute recesses having the same shape may be divided in the radial direction to respectively constitute the first and second dynamic pressure generating regions.

Further, in the first to eighth embodiments, although it has been described that the first dynamic pressure generation grooves have the same shape, that is, the radial position of the terminating end is constant, the present invention is not limited thereto, and for example, if the terminating end is located on the leakage side in relation to the radial position of the terminating end of the second dynamic pressure generation groove, a plurality of first dynamic pressure generation grooves of different shapes with terminating ends at different radial positions may be formed.

### {REFERENCE SIGNS LIST}

10 Stationary seal ring
11, 21 Sliding surface
13 Dynamic pressure generation groove (first dynamic pressure generation groove)
14 Dynamic pressure generation groove (second dynamic pressure generation groove)
14c Extension portion
15 First dynamic pressure generating region
16 Arc groove (minute recess)
20 Rotating seal ring
35 First dynamic pressure generating region
36 Radial groove (minute recess)
45 First dynamic pressure generating region
46 Spiral groove (minute recess)
55 Second dynamic pressure generating region
56 Annular groove (minute recess)
66 Radial groove (minute recess)
67 Radial groove (minute recess)
76 Spiral groove (minute recess)
77 Spiral groove (minute recess)
S1 Leakage side space
S2 Sealed fluid side space

## Claims

1. A sliding component comprising a pair of sliding rings having sliding surfaces which rotate relative to each other to partition a sealed fluid side space and a leakage side space,
wherein at least one of the sliding surfaces is provided with first dynamic pressure generation grooves each of which communicates with the leakage side space and second dynamic pressure generation grooves each of which has a terminating end position on a sealed fluid side, the terminating end portion being located on the sealed fluid side in relation to a terminating end position of the first dynamic pressure generation groove on the sealed fluid side,
wherein each of the second dynamic pressure generation grooves has an extension portion that protrudes toward the sealed fluid side in relation to the terminating end portion of the first dynamic pressure generation groove, and
wherein a first dynamic pressure generating region which is constituted by a plurality of minute recesses not communicating with the sealed fluid side space and the leakage side space is formed on the sealed fluid side between the extension portions of the second dynamic pressure generation grooves adjacent to each other in a circumferential direction.

2. The sliding component according to claim 1,
wherein each of the minute recesses has a circumferential width and a radial width, and narrower one of the circumferential width and the radial width is narrower than circumferential widths of the first dynamic pressure generation groove and the second dynamic pressure generation groove.

3. The sliding component according to claim 1,
wherein a second dynamic pressure generating region which is constituted by a plurality of minute recesses not communicating with the sealed fluid side space and the leakage side space is formed on the sealed fluid side in relation to the terminating end of the second dynamic pressure generation groove.

4. The sliding component according to claim 3,
wherein the minute recesses constituting the first dynamic pressure generating region formed between the extension portions of the second dynamic pressure generation grooves adjacent to each other in the circumferential direction are equal, in groove pattern, to the minute recesses constituting the second dynamic pressure generating region formed on the sealed fluid side in relation to the terminating end of the second dynamic pressure generation groove.

5. The sliding component according to claim 3,
wherein the second dynamic pressure generating region includes an annular minute recess which is formed on the most sealed fluid side in the second dynamic pressure generating region.

6. The sliding component according to any one of claims 1 to 5,
wherein the minute recesses constituting the first dynamic pressure generating region formed between the extension portions of the second dynamic pressure generation grooves adjacent to each other in the circumferential direction are formed to lengthen in a relative rotation direction of the sliding surfaces.

7. The sliding component according to any one of claims 1 to 3,
wherein the minute recesses constituting the first dynamic pressure generating region formed between the extension portions of the second dynamic pressure generation grooves adjacent to each other in the circumferential direction have a circumferential component and a radial component larger than the circumferential component.
